# EUROPEAN PATENT SPECIFICATION

(11) **EP 1 406 022 B1**
(45) Date of publication and mention of the grant of the patent: **07.06.2006**
(21) Application number: 02256912.3
(22) Date of filing: 04.10.2002
(51) Int. Cl.: F16B 21/02, F16B 37/04, F16B 21/04

(54) **Stud fastener**
Befestigungsmittel mit Bajonettsicherung
Dispositif de fixation à baionnette

(43) Date of publication of application: 07.04.2004
(73) Proprietor: Southco, UK Ltd, Warndon Worcester, Worcestershire WR3 1FA (GB)
(72) Inventor: Goater, Ben David, Alton, Hampshire GU34 2RL (GB); Lambert, Anthony James, Burpham, Guildford, Surrey GU1 1YH (GB)
(74) Representative: Weber, Roland

(56) References cited:
- EP-A- 0 529 466
- GB-A- 1 548 104
- US-A- 4 333 211
- US-A- 4 442 561

## Description

The present invention relates to a fastener and, in particular, to a stud fastener of the fast acting type which, in use, is connected to a receptacle in order to retain one or more components securely therebetween. US-A-4 333 211 shows a fastener according to the preamble of claim 1.

There are many types of fasteners currently known in the art. However, a drawback with known fasteners is that they are only able to retain material of limited variance in thickness.

It is therefore clearly advantageous to provide a fastener which can retain one or more components having a wider range of thickness variance than is currently possible with conventional fasteners. At the same time, however, the fastener should be quick and simple to use, and must provide sufficient fastening strength such that it will not work loose during use. In addition, it is also clearly advantageous that, when necessary, the fastener is easy to dismantle. Furthermore, in order to keep the manufacturing costs of the fastener to a minimum, it is beneficial to provide a fastener which comprises a minimal number of components, which are simple to manufacture and replace as necessary. Whilst known first acting fasteners achieve many of the above objections they are unable to handle large variations in thickness.

According to the present invention, a stud fastener for connecting, in use, to a receptacle in order to retain one or more components therebetween comprises a head portion for engaging, in use, with one of the components after insertion of the stud fastener therethrough, a cam for engaging, in use, with the receptacle, and engaging means arranged to engage with the receptacle in use and retain the stud fastener thereon, characterised in that the engaging means is arranged to be able to retain the stud fastener in at least two different positions in the insertion direction.

According to the present invention, there is also provided a fastener which comprises a stud fastener of the type defined above and a receptacle, the receptacle comprising a protrusion for engaging, in use, with the engaging means.

The stud fastener according to the present invention overcomes the aforementioned problem associated with conventional fasteners, whilst also being quick and easy to use and cost-effective to manufacture. In particular, the stud fastener may, in use, be adjusted such that components of varying thicknesses may be readily retained.

The engaging means may comprise at least two recesses formed in a surface of the cam. In this case, the recesses are spaced apart from one another in the insertion direction such that, in use, at least one of the recesses engages with one or more protrusions on the receptacle with the result that the stud fastener is securely held within the receptacle. Which recess is engaged by the protrusion is dependent on the extent to which the stud fastener may be tightened within the receptacle. This, in turn, is dependent on the total thickness of the one or more components to be retained between the stud fastener and the receptacle.

Alternatively, the engaging means may comprise at least two channels in the form of cams which are positioned along the length of the stud fastener and which are spaced apart from one another in the insertion direction of the stud fastener. In this case, each channel comprises a recess, which is typically located at one end of the channel formed in the surface of the cam.

In use, at least one of the channels will engage with one or more protrusions on the receptacle with the result that the stud fastener is securely held within the receptacle. Specifically, on insertion of the stud fastener into the receptacle, the protrusion on the receptacle will travel along the channel and will come to rest in the recess of the channel. Which channel is engaged by the protrusion will, again, be dependent on the extent to which the stud fastener may be inserted into the receptacle, which is itself dependent on the total thickness of the one or more components to be retained.

In a further alternative, the engaging means may be formed separately to the cam on the stud fastener. In this case, the engaging means preferably comprises at least two channels, which are substantially parallel to the insertion direction of the stud fastener. In use, at least one of the channels will engage with one or more protrusions on the receptacle to hold the stud fastener securely within the receptacle. Again, which channel the protrusion engages will depend on the extent to which the stud fastener may be tightened within the receptacle, which itself is dependent on the total thickness of the one or more components to be retained.

In order to ensure that the stud fastener of the present invention may be smoothly inserted into the receptacle and the components drawn together, the stud fastener preferably comprises at least two cams.

The stud fastener according to the present invention engages with a receptacle to form a fastener which securely retains one or more components therebetween. Engagement is achieved via interaction of the engaging means on the stud fastener with a protrusion on the receptacle. In order to achieve a more secure fastening, however, the receptacle preferably comprises at least two protrusions.

The present invention will now be described with reference to the accompanying drawings, in which:
Figure 1 is a side perspective view of a stud fastener according to the present invention;
Figure 2 is a side perspective view of a further stud fastener according to the present invention;
Figure 3 is a perspective view of a receptacle suitable for engagement with the stud fasteners illustrated in Figures 1 and 2;
Figure 4 is a cross-sectional side view through a fastener according to the present invention, in which the stud fastener illustrated in Figure 1 / 2 is fully engaged with the receptacle illustrated in Figure 3;
Figure 5 is a side perspective view of a yet further stud fastener according to the present invention;
Figure 6 is a perspective view of a receptacle suitable for engagement with the stud fastener illustrated in Figure 5; and
Figure 7 is a cross-sectional side view through a fastener comprising the stud fastener of Figure 5 fully engaged with the receptacle of Figure 6.

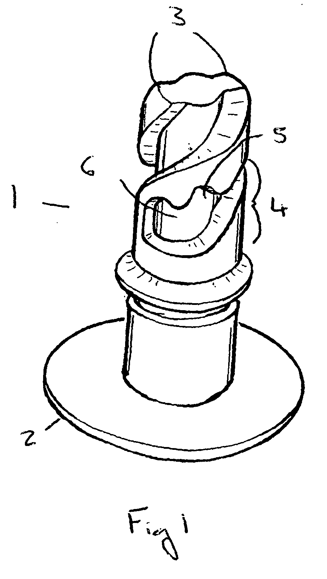

Referring to Figure 1, an example of a stud fastener 1 according to the present invention comprises a head portion 2, two cams 3 and engaging means 4. The engaging means comprises two recesses 5,6 formed in a surface of each cam 3.

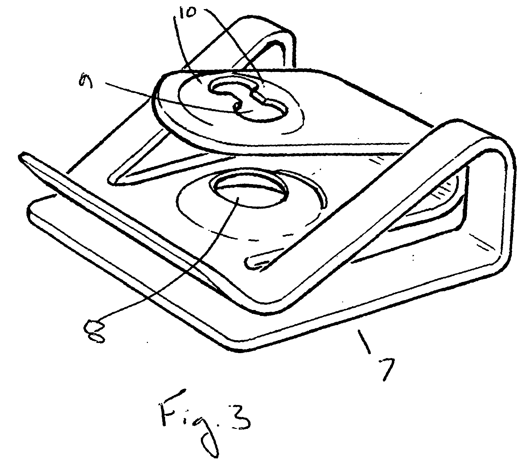

Figure 3 shows a receptacle 7 comprising apertures 8 and 9, aperture 9 comprising two protrusions 10.

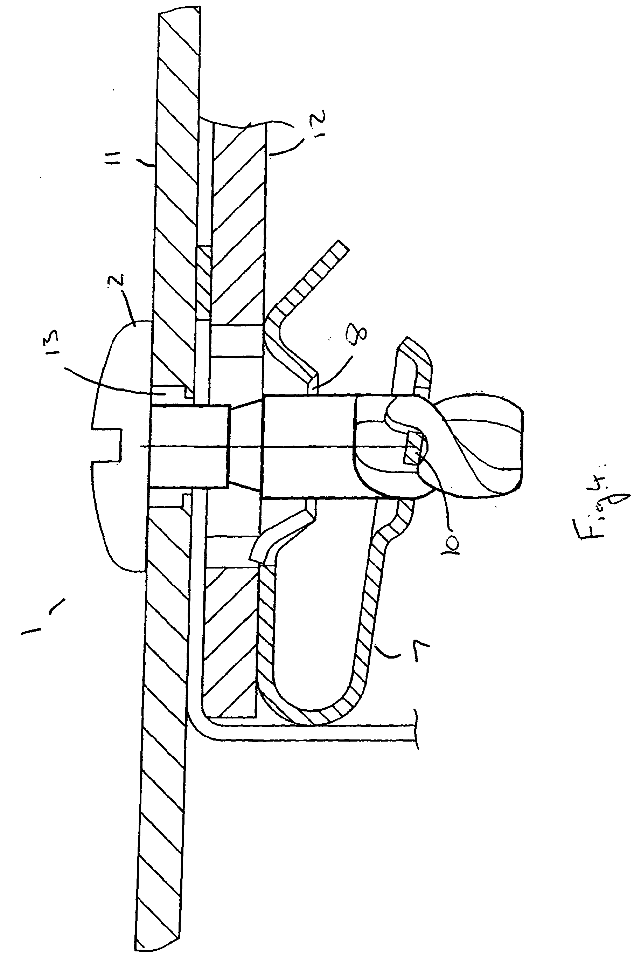

Referring to Figure 4, in use, stud fastener 1 engages with receptacle 7 to fasten panel 11 securely to support 12. Stud fastener 1 is inserted through aperture 13 in panel 11, and subsequently through aperture 8 in receptacle 7 such that head portion 2 engages with one side of panel 11, and protrusions 10 engage with one recess 5,6 to hold stud fastener 1 securely in position.

If the combined thickness of panel 11 and support 12 is relatively large, protrusion 10 will engage with recess 5, whereas if panel 11 and support 12 are of relatively small combined thickness, stud fastener 1 may be more tightly secured within receptacle 7 and protrusion 10 will therefore engage with recess 6.

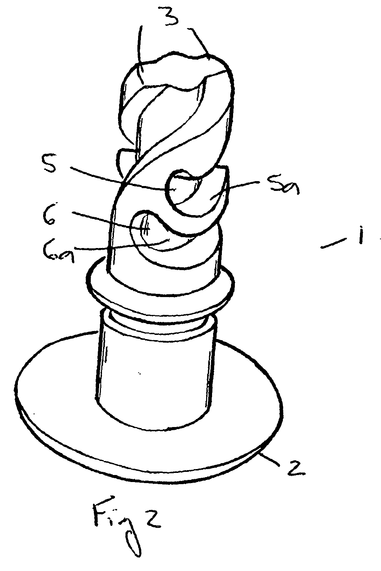

Referring to Figure 2, a second example of the stud fastener 1 according to the present invention comprises a head portion 2 and two cams 3. Engaging means 4 of stud fastener 1 comprises two channels 5a,6a, each of which comprises a recess 5,6 at one end.

In use, insertion and retention of the stud fastener 1, illustrated in Figure 2, in receptacle 7 is achieved in a similar way to that of the stud fastener illustrated in Figure 1. Insertion results in engagement of protrusions 10 with at least one channel 5a,6a. Protrusions 10 will travel along channel 5a,6a until they engage with recess 5,6, thus holding stud fastener 1 securely within receptacle 7.

Which of the channels is engaged will, as with the stud fastener of Figure 1, depend on the combined thickness of panel 11 and support 12. If this thickness is relatively large, protrusion 10 will travel along channel 5a and engage with recess 5, whereas if the thickness is relatively small, protrusion 10 will travel along channel 6a and engage with recess 6.

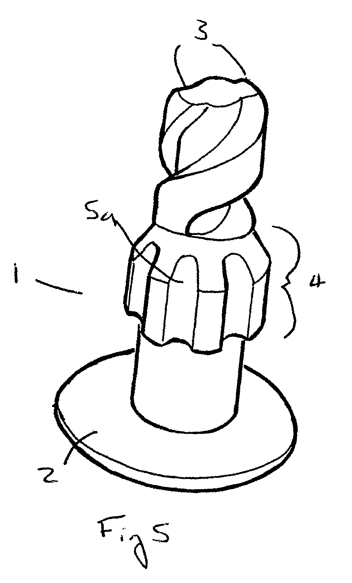

Referring to Figure 5, a further example of the stud fastener 1 of the present invention comprises a head portion 2 and two cams 3. Engaging means 4 of stud fastener 1 comprises a plurality of channels 5a, which are substantially parallel to the insertion direction of stud fastener 1.

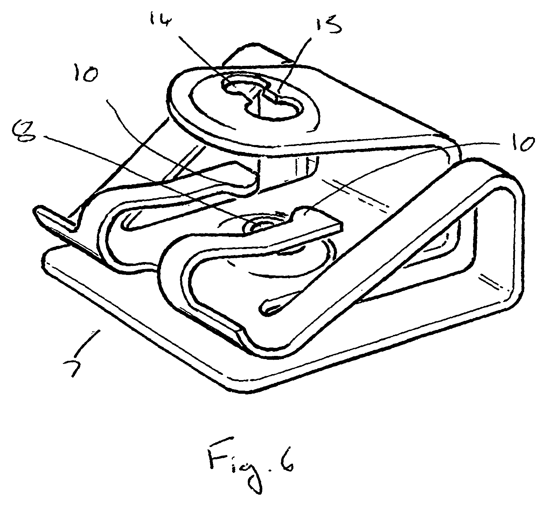

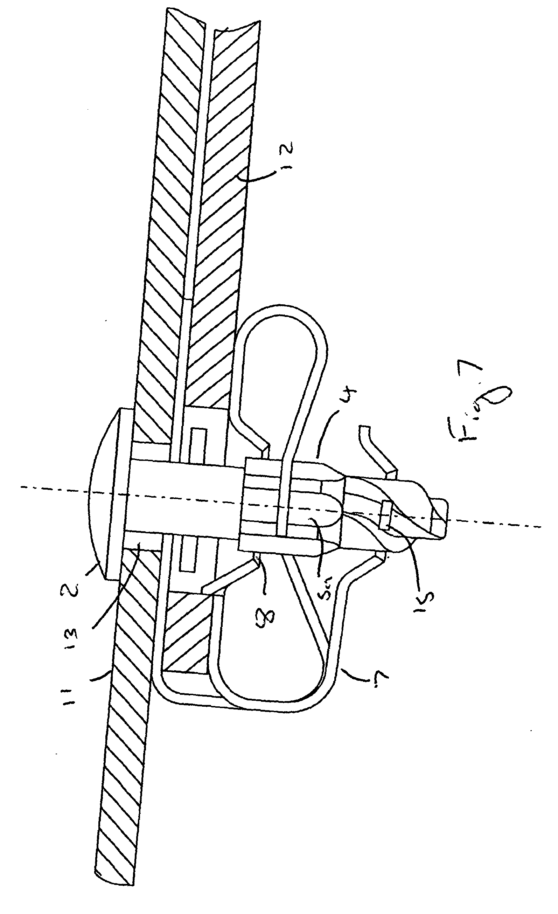

Figure 6 shows a receptacle 7 comprising apertures 8 and 14 and two protrusions 10. Aperture 14 also comprises two tabs 15. As shown in Figure 7, in use, stud fastener 1 is inserted through aperture 13 in panel 11 and cams 3 subsequently travel through aperture 14 engaging with tabs 15 to guide the movement of stud fastener 1 within receptacle 7. Protrusions 10 on receptacle 7 engage with two of channels 5a to hold stud fastener 1 securely in position.

Disengagement of all of the examples of stud fasteners 1 according to the present invention from receptacle 7, may be easily achieved by twisting the stud fastener in the opposite direction to that in which it was twisted to engage with the receptacle.

## Claims

1. A stud fastener (1) for connecting, in use, to a receptacle (7) in order to retain one or more components (11,12) therebetween, the stud fastener comprising a head portion (2) for engaging, in use, with one of the components (11) after insertion of the stud fastener (1) therethrough, a cam (3) for engaging, in use, with the receptacle (7), and engaging means (4) arranged to engage with the receptacle (7) in use and retain the stud fastener (1) thereon,
**characterised in that** the engaging means (4) is arranged to be able to retain the stud fastener (1) in at least two different positions in the insertion direction.

2. A stud fastener (1) according to claim 1, wherein the engaging means comprises at least two recesses (5, 6) formed in a surface of the cam (3) and spaced apart from one another in the insertion direction.

3. A stud fastener (1) according to claim 1, wherein the engaging means comprises at least two channels (5a, 6a) positioned along the length of the stud fastener and spaced apart from one another in the insertion direction, wherein each channel comprises a recess (5, 6).

4. A stud fastener (1) according to claim 1, wherein the engaging means (4) is separate from the cam (3).

5. A stud fastener (1) according to claim 4, wherein the engaging means (4) comprises at least two channels (5a) substantially parallel to the insertion direction of the stud fastener (1).

6. A stud fastener (1) according to any preceding claim, which comprises at least two cams (3).

7. A fastening device comprising a stud fastener (1) according to any preceding claim and a receptacle (7), wherein the receptacle comprises a protrusion (10) for engaging, in use, with the engaging means (4).

8. A fastening device according to claim 7, wherein the receptacle (7) comprises at least two protrusions (10).

## Patentansprüche

1. Bolzenbefestigung (1) für die Verbindung mit einer Aufnahme bzw. Buchse (7), um ein oder mehrere Bauteile (11, 12) dazwischen zu halten, wobei die Bolzenbefestigung einen Kopfabschnitt (2) aufweist, der in Gebrauch mit einem der Bauteile (11) in Eingriff tritt, nachdem die Bolzenbefestigung (1) hindurchgesteckt wurde, einen Nocken (3) aufweist, um im Gebrauch mit der Aufnahme (7) in Eingriff zu treten, und eine Eingriffseinrichtung (4) aufweist, die dafür ausgelegt ist, im Gebrauch mit der Aufnahme bzw. Buchse (7) in Eingriff zu treten und die Bolzenbefestigung (1) daran festzuhalten, **dadurch gekennzeichnet, daß** die Eingriffseinrichtung (4) dafür ausgelegt ist, daß sie die Bolzenbefestigung (1) in der Einschubrichtung gesehen in zumindest zwei verschiedenen Positionen halten kann.

2. Bolzenbefestigung (1) nach Anspruch 1, wobei die Eingriffseinrichtung zumindest zwei Aussparungen (5, 6) aufweist, die in einer Oberfläche des Nockenteils (3) ausgebildet und in Einschubrichtung voneinander beabstandet sind.

3. Bolzenbefestigung (1) nach Anspruch 1, wobei die Eingriffseinrichtung zumindest zwei Kanäle (5a, 6a) aufweist, die im Abstand entlang der Länge des Befestigungsbolzens positioniert und in Einschubrichtung voneinander beabstandet sind, wobei jeder Kanal eine Aussparung (5, 6) aufweist.

4. Befestigungsbolzen (1) nach Anspruch 1, wobei die Eingriffseinrichtung (4) von dem Nockenteil (3) getrennt ist.

5. Befestigungsbolzen (1) nach Anspruch 4, wobei die Eingriffseinrichtung (4) zumindest zwei Kanäle (5a) aufweist, die im wesentlichen parallel zu der Einsteckrichtung des Befestigungsbolzens (1) verlaufen.

6. Befestigungsbolzen (1) nach einem der vorstehenden Ansprüche, welcher zumindest zwei Nockenteile (3) aufweist.

7. Befestigungseinrichtung, welche einen Befestigungsbolzen nach einem der vorstehenden Ansprüche und eine Aufnahme bzw. Buchse (7) aufweist, wobei die Aufnahme einen Vorsprung (10) aufweist, um im Gebrauch mit der Eingriffseinrichtung in Eingriff zu treten.

8. Befestigungseinrichtung nach Anspruch 7, wobei die Aufnahme bzw. Buchse (7) wenigstens zwei Vorsprünge (10) aufweist.

## Revendications

1. Organe de fixation à goujon (1) destiné à raccorder, pendant une utilisation, à un organe réceptacle (7) afin qu'un ou plusieurs éléments (11, 12) soient retenus entre eux, l'organe de fixation à goujon comprenant une partie de tête (2) destinée, pendant l'utilisation, à coopérer avec l'un des éléments (11) après insertion de l'organe de fixation à goujon (1) à travers lui, une came (3) destinée, pendant l'utilisation, à coopérer avec l'organe réceptacle (7) et un dispositif (4) de coopération destiné à coopérer avec l'organe réceptacle (7) pendant l'utilisation, et à retenir sur lui l'organe (1) de fixation à goujon, **caractérisé en ce que** le dispositif de coopération (4) est destiné à pouvoir retenir l'organe de fixation à goujon (1) dans au moins deux positions différentes dans la direction d'insertion.

2. Organe de fixation à goujon (1) selon la revendication 1, dans lequel le dispositif de coopération comprend au moins deux cavités (5, 6) formées dans une surface de la came (3) et espacées l'une de l'autre dans la direction d'insertion.

3. Organe de fixation à goujon (1) selon la revendication 1, dans lequel le dispositif de coopération comprend au moins deux canaux (5a, 6a) disposés suivant la longueur de l'organe de fixation à goujon et séparés l'un de l'autre dans la direction d'insertion, chaque canal comportant une cavité (5, 6).

4. Organe de fixation à goujon (1) selon la revendication 1, dans lequel le dispositif de coopération (4) est séparé de la came (3).

5. Organe de fixation à goujon (1) selon la revendication 4, dans lequel le dispositif de coopération (4) comporte au moins deux canaux (5a) pratiquement parallèles à la direction d'insertion de l'organe de fixation à goujon (1).

6. Organe de fixation à goujon (1) selon l'une quelconque des revendications précédentes, qui comporte au moins deux cames (3).

7. Dispositif de fixation comprenant un organe de fixation à goujon (1) selon l'une quelconque des revendications précédentes et un organe réceptacle (7), dans lequel l'organe réceptacle comporte une saillie (10) destinée, pendant l'utilisation, à coopérer avec le dispositif de coopération (4).

8. Dispositif de fixation selon la revendication 7, dans lequel l'organe réceptacle (7) comporte au moins deux saillies (10).
